# EUROPEAN PATENT SPECIFICATION

(11) **EP 1 509 440 B1**
(45) Date of publication and mention of the grant of the patent: **12.10.2005**
(21) Application number: 03724766.5
(22) Date of filing: 30.05.2003
(51) Int. Cl.: B62M 1/02, B62M 3/00

(54) **CRANK WITH FREEWHEEL**
KURBEL MIT FREILAUF
MANIVELLE A ROUE LIBRE

(30) Priority: 03.06.2002 CH 926022002; 29.11.2002 CH 201702
(43) Date of publication of application: 02.03.2005
(73) Proprietor: Tanner, Urs, 3076 Worb (CH)
(72) Inventor: WALTHER, Manfred, CH-3067 Bolligen (CH); TANNER, Urs, CH-3076 Worb (CH)
(74) Representative: Clerc, Natalia
(86) International application number: PCT/CH2003/000340
(87) International publication number: WO 2003/101815

(56) References cited:
- DE-A- 3 939 609
- FR-A- 2 689 849
- US-A- 5 860 329

## Description

### Technical Field

The invention relates to a crank in accordance with the precharacterizing clause of Claim 1. This crank is preferably suitable for cycles, mountain bikes, home trainers, training equipment and medical exercise equipment.

### Prior art

A pedal crank of the generic type for a cycle or a piece of training equipment is known from US-A-5 860 329. It has a crank arm for a pedal and a freewheel clutch for connection to a crankshaft of a cycle. This freewheel clutch essentially comprises a freewheel or one-way sleeve, which is connected in a rotationally fixed manner to the crank arm, and an adapter, which can be connected in a rotationally fixed manner to the crankshaft. The freewheel clutch makes it possible for a torque to be transmitted to the crankshaft and hence to a cycle chain when the crank is turned in a first direction. However, rotation in the opposite direction takes place in freewheeling mode, i.e. the torque is not transmitted.

In the case of this one-way pedal crank, the pedals of a cycle turn independently of one another. Each pedal must therefore be moved actively upwards. Unless at least the weight of the pedal is used for this purpose, the two pedals no longer turn synchronously. The rider will automatically increase the effort expended in order to pedal "smoothly" again, i.e. to operate the two pedals in the same rhythm, though with a phase shift. This one-way pedal crank furthermore allows the rider to produce a relatively constant and high power output over a relatively long period of time. In the case of training equipment, all the leg muscles, especially the muscles at the back of the leg, can be exercised in this way.

### Description of the invention

It is an object of the invention to improve the pedal crank of the type stated at the outset in such a way as to provide more training options.

This object is achieved by a crank having the features of Patent Claim 1.

The crank according to the invention has at least one fixing means to enable either freewheeling dependent on the direction of rotation or torque coupling in both directions of rotation.

This fixable freewheel pedal crank has a number of advantages. Thus a rider who is not experienced with the freewheel system can switch back at any time to the system with which he is familiar. This ensures that he does not overexert untrained muscles, e.g. the muscles at the back of the leg, when training.

With the purchase of this device, the purchaser obtains not only the system already familiar to him but also a new system, which he can use and test as desired. There are no separate acquisition costs for this new, as yet unfamiliar system.

However, the crank according to the invention is also suitable for medical exercise equipment, especially in rehabilitation. The ability to switch the torque transmission systems over makes it possible to explain sequences of motion to the patient more effectively. His coordination abilities are improved or, in the area of therapy, restored.

In particular, the crank according to the invention can be used as a pedal crank in cycles and similarly constructed means of locomotion and in training or exercise equipment. However, the area of application is not restricted to this. It can also be used, for instance, in manually driven equipment in which switching between an enforced phase-shifted or in-phase synchronous motion and freewheeling is desired.

Further advantageous embodiments will emerge from the dependent claims.

### Brief description of the drawing

The subject matter of the invention will be explained below with reference to preferred exemplary embodiments, which are illustrated in the attached drawing, in which:
Figure 1 shows a partial section through a crank according to the invention in a first embodiment;
Figure 2 shows a cross section through the crank in Figure 1 along A-A;
Figure 3 shows a partial section through a crank according to the invention in a second embodiment;
Figure 4 shows a cross section through the crank in Figure 3 along A-A;
Figure 5 shows a cross section through the crank in Figure 3 along B-B;
Figure 6 shows a partial section through a crank according to the invention in a third embodiment;
Figure 7 shows a cross section through the crank in Figure 6 along A-A;
Figure 8 shows a cross section through a crank according to the invention in a fourth embodiment;
Figure 9 shows a partial section through the crank in Figure 8;
Figure 10 shows a side view of a locking stud in Figure 8;
Figure 11 shows a cross section along A-A in Figure 10;
Figure 12 shows a cross section along B-B in Figure 10;
Figure 13 shows a cross section through a crank according to the invention in a fifth embodiment, and
Figure 14 shows a partial section through the crank in Figure 13.

### Ways of implementing the invention

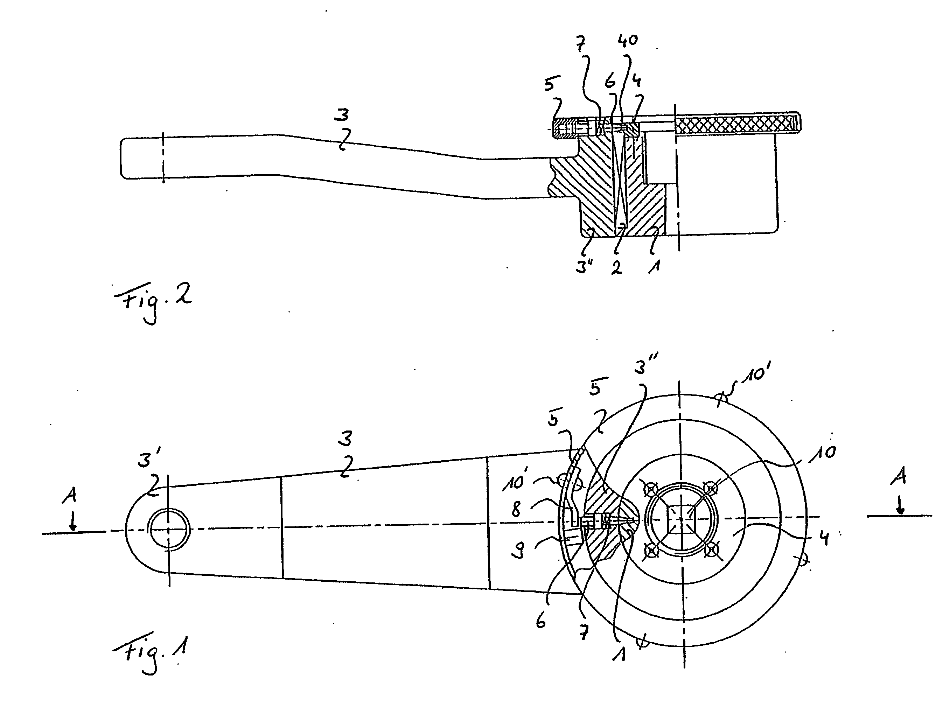

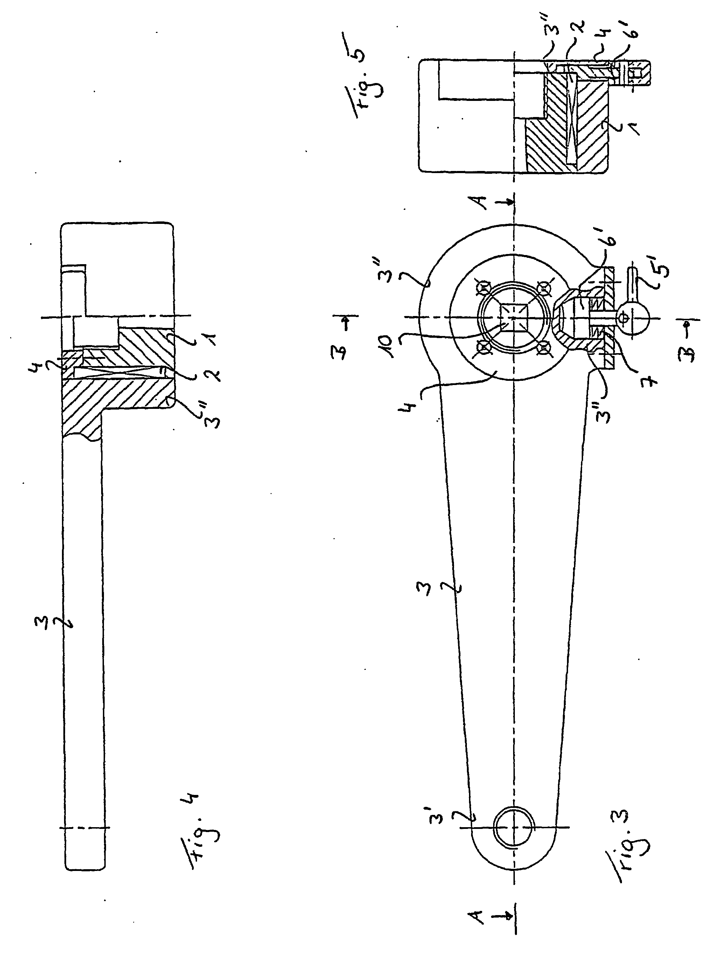

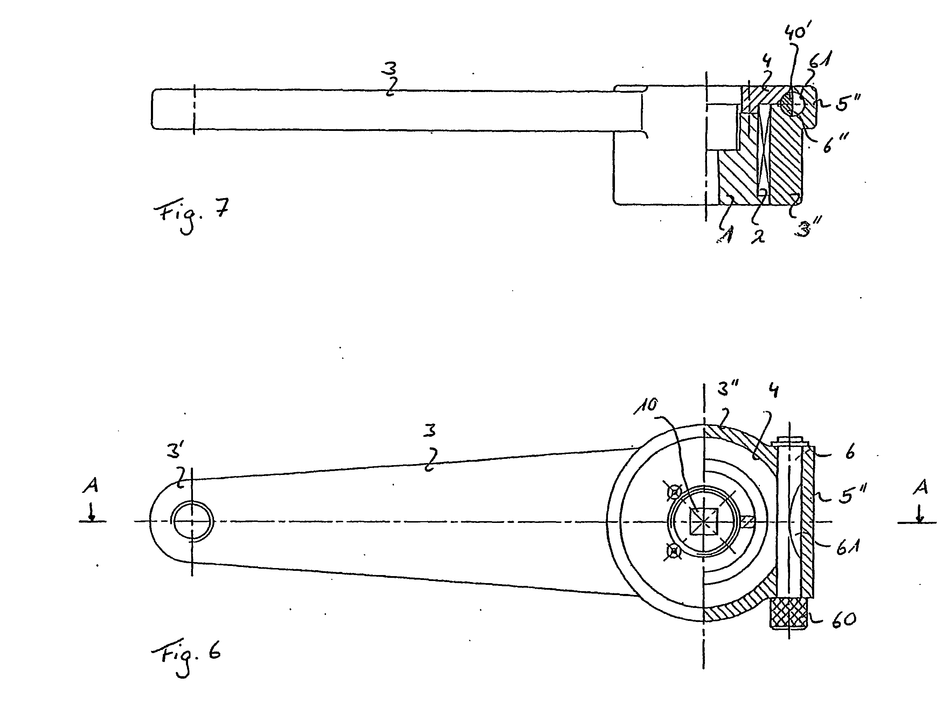

Figures 1 and 2 illustrate a first exemplary embodiment of the crank according to the invention. It has an adapter 1, which has a receiving opening 10 for a crankshaft of a cycle or some other device. The receiving opening 10 is used for the rotationally fixed connection of the adapter 1 to the crankshaft and therefore generally has a square/octalink cross section. The adapter has a cylindrical main body, which is preferably provided with a flange on the crankshaft side. A one-way or freewheel sleeve 2 is mounted on the adapter 1. This sleeve is connected in a rotationally fixed manner to a crank arm 3. For this purpose, the crank arm 3 has at one end a cylindrical housing 3'', in which the freewheel sleeve 2 is arranged. If the crank is used as a pedal crank, the crank arm 3 can be connected at the other end to a pedal (not shown here).

The housing 3'', the freewheel sleeve 2 and the adapter 1 are preferably connected to one another and in relation to the crankshaft by means of screwed joints. The adapter 1 and the freewheel sleeve 2 form a one-way freewheel coupling. That is to say, a rotation of the crank arm 3 in a first direction of rotation transmits a torque to the crankshaft and thus to a cycle chain or some other drive element. In the case of rotation in the opposite direction, the crank arm 3 runs free. The torque produced is decoupled from the adapter 1 and hence from the crankshaft. As mentioned at the outset, a synchronously phase-shifted motion of the two pedals is only possible if the rider exerts on each individual pedal a force which is uniform over time. Moreover, thanks to this clutch the pedals can also rotate in phase, increasing the available training and therapy options.

One-way couplings of this kind are known from the prior art. In this connection, attention is drawn to US-A-5 860 329, mentioned at the outset. However, the construction of the one-way coupling should not be limited to this embodiment.

According to the invention, there is at least one fixing means, which allows optional switching from this one-way coupling to a two-way coupling, with the torque thus being transmitted to the crankshaft in both directions of rotation. In the example illustrated here, this fixing means is a sprung locking stud 6, which passes through a through opening in the housing 3'' and which can be brought into engagement with a receiving opening 40 of a cover disc 4. The cover disc 4 is arranged in a rotationally fixed manner on the adapter 1 or some other element connected in a rotationally fixed manner to the crankshaft.

In the example illustrated here, the locking stud 6 is actuated by means of a turning ring 5. The turning ring 5 is arranged concentrically around the cover disc 4 and in such a way as to be rotatable relative to the latter. There is an encircling cavity between the housing 3'' and the turning ring 5. As can be seen in Figure 1, a spring strap 8 arranged on the inner ring surface of the turning ring 5 projects into this cavity. The spring strap 8 is preferably fastened to the turning ring 5 by means of a rivet 10'. By turning the turning ring 5, in this case in the clockwise direction, the locking stud 6 held in the housing 3'' is pushed in the direction of the receiving opening 40 of the cover disc 4 against the spring force of a return spring 7, with the result that it forms a form-locking connection between the crank arm 3 and the crankshaft. To prevent the turning ring 5 from being turned too far, it preferably has a stop stud 9, which projects into the cavity at a location adjacent to the spring strap 8 and rests against the locking stud 6 in the locked state. The locking stud 6 acts as a driver for the cover disc 4, with the result that the torque is transmitted from the crank arm 3 to the crankshaft even when the freewheel sleeve 2 is freewheeling. If the turning ring 5 is turned in the other direction, the locking stud 6 slides outwards along the spring strap 8 and releases the cover disc 4 again. In this state, torque transmission then takes place only in one direction of rotation.

A plurality of fixing means is preferably provided. It is advantageous if they are arranged as uniformly as possible around the periphery. In the example illustrated here, there are four locking studs 6 and four associated spring straps 8. However, it is also possible to use three or some other number of studs.

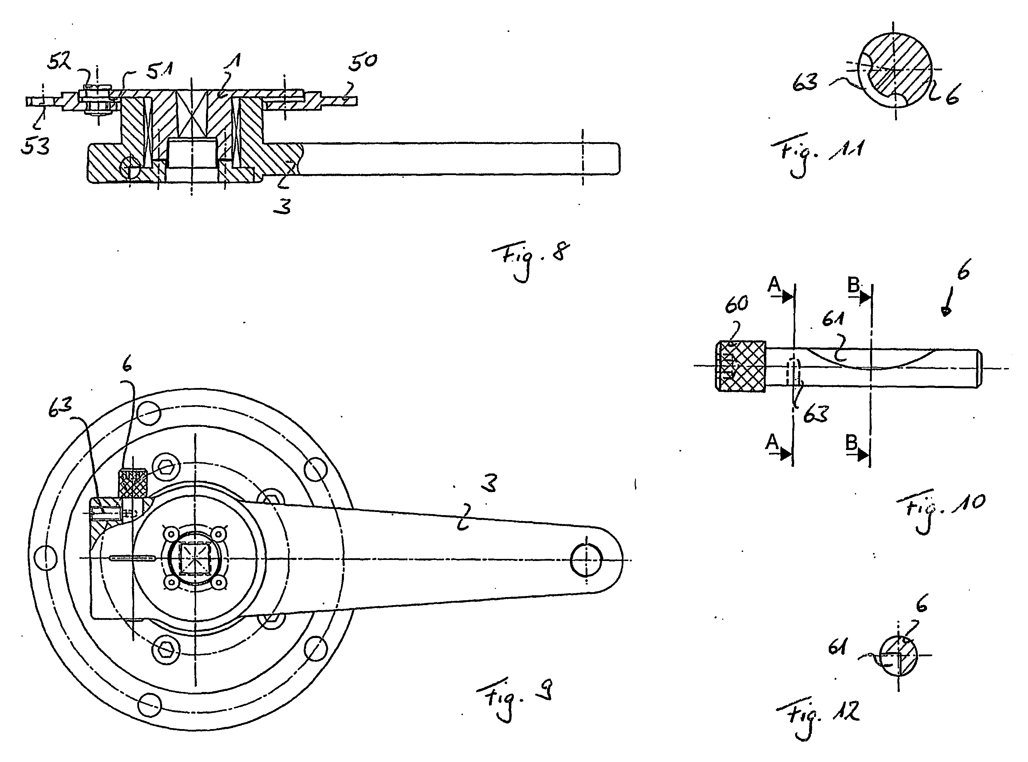

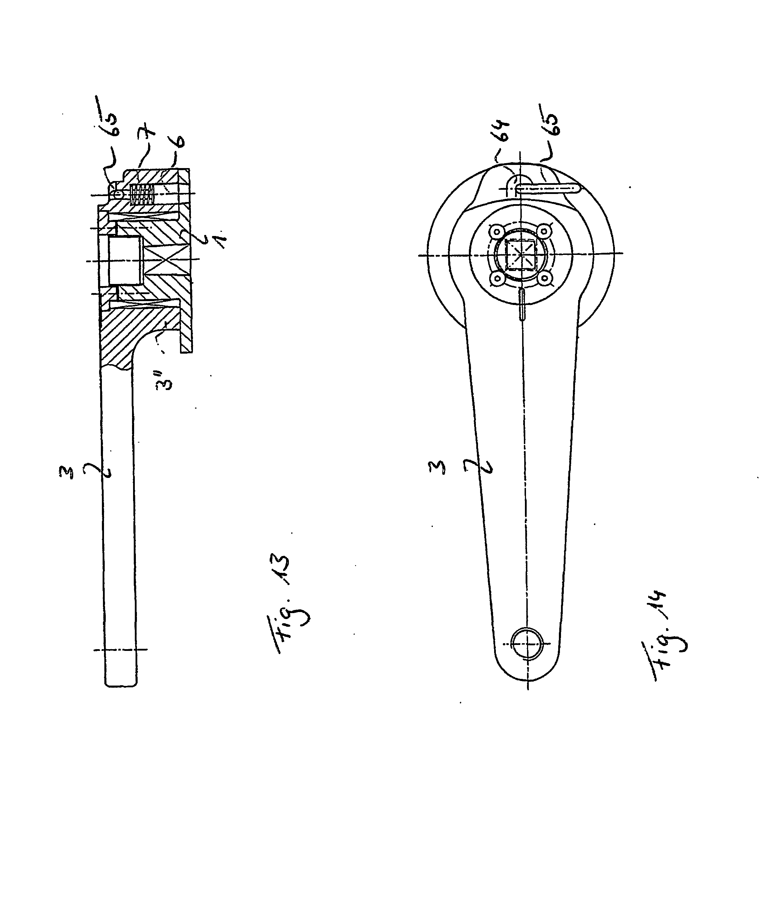

A second preferred exemplary embodiment is illustrated in Figures 3 to 5. The one-way coupling is of identical construction to the first exemplary embodiment and is therefore not described further. Identical parts are denoted by the same reference numerals as in Figures 1 and 2.

As the fixing means, however, there is now a locking wedge 6', which can be actuated by means of an eccentric stud 5'. If the eccentric stud 5' is turned in one direction, in this case in the clockwise direction, the locking wedge 6' turns into the receiving opening 40 of the cover disc 4 and again forms a driver for the adapter 1 or some other suitable element. If the eccentric stud 5' is turned in the opposite direction, the cover disc 4 is released.

The two embodiments described above have the advantage that the means for switching between the two systems are relatively small. Moreover, the fixing means can also be operated by an experienced rider or, in the case of a rehabilitation exercise, by the therapist. Another advantage is the fact that existing one-way couplings can also be retrofitted with the switch according to the invention. For this purpose, all that is required is for a cover disc to be connected to the existing crank and for the crank arm to be replaced by a new crank arm with a turning ring and an integrated fixing means. If a disc-shaped intermediate element is fastened in a rotationally fixed manner to the crankarm housing, which has the fixing means, the crank arm does not have to be replaced.

Figures 6 and 7 illustrate a third exemplary embodiment. Once again, identical parts are denoted by the same reference numerals and are not described further in the text which follows. As the fixing means there is now a locking pin 6'', which is supported rotatably in a flange 5'' formed on the side of the housing 3''. The flange 5'' can also be arranged on the side of the housing 3'' as a separate element forming part of a retrofitting kit. The locking pin 6'' preferably extends tangentially with respect to the housing 3'' and is situated on a diametrically opposite side of the housing 3'' from one of the pedals. The locking pin 6'' has a turning head 60 which projects beyond the flange 5'' and is used for turning the pin 6'' manually. The pin 6'' has a partially cylindrical lateral recess 61. Figures 6 and 7 show a first position, in which the pin 6'' is in engagement with a correspondingly shaped receiving opening 40' of the cover disc 4 and thus forms a driver for the adapter 1. If the pin 6'' is turned through 180° into a second position, the recess 61 moves into the area of the receiving opening 40', the cover disc 4 is released and the one-way clutch is activated.

Figures 8 to 12 show a fourth exemplary embodiment. It corresponds essentially to the third exemplary embodiment. In this case, however, the locking pin 6 can be fixed. For this purpose, the locking pin 6 has a fixing groove 62, into which a fixing pin 63 can be engaged. The fixing pin 63 is preferably provided with a thread and is screwed into a hole extending transversely to the longitudinal direction of the stud 6.

This exemplary embodiment furthermore illustrates an adapter disc 50, which can be fastened to the adapter or hub 1. A screw, preferably a chain ring screw 52, is preferably used for fastening. A washer 51 can be arranged between the adapter disc 50 and the hub 1. The adapter disc 50 furthermore has a hole 53 for fastening the chain ring (not shown here). The adapter disc can also be fastened turned through 180° or on the other side of the flange of the hub 1. Moreover, the washer 51 can be arranged on different sides. This enables chain rings to be positioned accurately. This adapter disc 50 can also be used with a crank other than the crank according to the invention.

Figures 13 and 14 illustrate a fifth exemplary embodiment. In this case, the locking acts on the adapter or the hub 1. In the crank housing 3'' there is a hole that extends parallel to the axis, in which the locking stud 6 is held in a sprung manner. This stud 6 engages in an opening in the flange of the hub 1. The stud 6 can be actuated by means of a two-armed fixing lever 65. If a first arm of this lever 65 is pivoted, it slides down along a sloping guide surface, here referred to as ramp 64, and the second arm, which projects perpendicularly therefrom, strikes the stud 6, pushing the latter into the opening of the hub 1. This example again has the advantage that it is simple to operate. Moreover, the lever 65 ensures a certain fixing of the stud.

The device according to the invention thus allows simple switching between one-way coupling and two-way coupling and extends the available training and therapy options.

### List of reference numerals

- 1: Adapter
- 10: Receptacle for crankshaft
- 2: Freewheel sleeve
- 3: Crank arm
- 3': Pedal end
- 3'': Housing
- 4: Cover disc
- 40: Receiving opening
- 40': Receiving opening
- 5: Turning ring
- 5': Eccentric stud
- 5'': Flange
- 50: Adapter flange
- 51: Washer
- 52: Chain ring screw
- 53: Hole
- 6: Locking stud
- 6': Locking wedge
- 6'': Locking pin
- 60: Turning head
- 61: Recess
- 62: Locking groove
- 63: Locking pin
- 64: Ramp
- 65: Locking lever
- 7: Return spring
- 8: Spring strap
- 9: Stop stud
- 10': Rivet

## Claims

1. Crank with a crank arm (3) and a freewheel element (1, 2), the crank arm (3) having a first end for fastening a pedal and a second end for fastening on a crankshaft by means of the freewheel element (1, 2), a rotation of the crank arm (3) in a first direction transmitting a torque to the crankshaft and, in the case of a rotation of the crank arm (3) in a second, opposite direction, the crank arm (3) rotating in a freewheeling mode, **characterized in that** the crank has at least one fixing means (6, 6', 6'') for cancelling freewheeling, allowing the torque of the crank arm (3) to be transmitted to the crankshaft in both directions of rotation.

2. Crank according to Claim 1, **characterized in that** the at least one fixing means (6, 6', 6'') connects the crank arm (3) and the crankshaft firmly in a direct or indirect manner.

3. Crank according to either of Claims 1 and 2, **characterized in that** the at least one fixing means (6, 6', 6'') creates a form-locking direct or indirect connection between the crank arm (3) and the crankshaft.

4. Crank according to one of Claims 1 to 3, **characterized in that** the at least one fixing means (6, 6', 6'') creates a form-locking connection between the second end of the crank arm (3) and an adapter (1) connected in a rotationally fixed manner to the crankshaft.

5. Crank according to one of Claims 1 to 4, **characterized in that** the freewheel element (1, 2) is a freewheel sleeve (2) which forms a one-way clutch with a or the adapter (1) connected in a rotationally fixed manner to the crankshaft, and **in that** the second end of the crank arm (3) is connected in a rotationally fixed manner to the freewheel sleeve (2).

6. Crank according to one of Claims 1 to 5, **characterized in that** a cover disc (4) is connected directly or indirectly in a rotationally fixed manner to the crankshaft, and **in that** the at least one fixing means (6, 6', 6'') engages in a recess of the cover disc (4) when cancelling freewheeling.

7. Crank according to Claim 6, **characterized in that** a plurality of fixing means (6, 6') is provided, which are arranged in a distributed manner around the periphery of the cover disc (4).

8. Crank according to either of Claims 6 and 7, **characterized in that** there is a turning ring (5) arranged concentrically with the cover disc (4), and **in that** the at least one fixing means is a sprung locking stud (6) which can be brought into engagement with the cover disc (4) by turning the turning ring (5).

9. Crank according to one of Claims 6 to 8, **characterized in that** the turning ring (5) has arranged on it at least one spring strap (8), which brings the at least one fixing means (6) into engagement with the cover disc (4) when the turning ring (5) is turned.

10. Crank according to either of Claims 6 and 7, **characterized in that** the at least one fixing means is a locking wedge (6'), which is connected to an eccentric stud (5'), and **in that** the locking wedge (6') can be brought into engagement with the cover disc (4) by turning the eccentric stud (5').

11. Crank according to Claim 6, **characterized in that** the at least one fixing means is a locking pin (6'') with a recess (61), the locking pin (6'') being in engagement with the cover disc (4) in a first position, and the recess (61) releasing the cover disc (4) in a second position.

## Patentansprüche

1. Kurbel mit einem Kurbelarm (3) und einem Freilauf-Element (1,2), wobei der Kurbelarm (3) ein erstes Ende zur Befestigung einer Pedale und ein zweites Ende zur Befestigung an einer Kurbelwelle unter Zuhilfenahme des Freilauf-Elementes (1,2) aufweist, wobei eine Rotation des Kurbelarmes (3) in einer ersten Richtung ein Drehmoment auf die Kurbelwelle ausübt und für den Fall einer Rotation des Kurbelarmes (3) in eine zweite, entgegengesetzte Richtung, der Kurbelarm in einem Freilauf-Modus rotiert, **dadurch gekennzeichnet, dass** die Kurbel wenigstens ein Befestigungsmittel (6, 6', 6'') zum Aufheben des Freilaufs aufweist, was es erlaubt, das Drehmoment der Kurbelwelle in beiden Rotationsrichtungen zu übertragen.

2. Kurbel nach Anspruch 1, **dadurch gekennzeichnet, dass** das wenigstens eine Fixier-Mittel (6,6',6'') den Kurbelarm (3) und die Kurbelwelle fest in direkter oder indirekter Weise verbindet.

3. Kurbel nach einem der Ansprüche 1 und 2, **dadurch gekennzeichnet, dass** das wenigstens eine Fixier-Mittel (6,6',6'') eine formschlüssige direkte oder indirekte Verbindung zwischen dem Kurbelarm (3) und der Kurbelwelle erzeugt.

4. Kurbel nach einem der Ansprüche 1 bis 3, **dadurch gekennzeichnet, dass** das wenigstens eine Fixier-Mittel (6,6',6'') eine formschlüssige Verbindung zwischen dem zweiten Ende des Kurbelarmes (3) und einem Adapter (1) erzeugt, welcher in einer rotationsmässig fixierten Art und Weise mit der Kurbelwelle verbunden ist.

5. Kurbel nach einem der Ansprüche 1 bis 4, **dadurch gekennzeichnet, dass** das Freilaufelement (1,2) eine Freilaufhülse (2) ist, welche eine Einweg-Kupplung damit bildet oder der Adapter (1) damit in einer rotationsmässig fixierten Art und Weise mit der Kurbelwelle verbunden ist, und dass das zweite Ende des Kurbelarmes (3) in rotationsmässig fixierter Weise mit der Freilaufhülse (2) verbunden ist.

6. Kurbel nach einem der Ansprüche 1 bis 5, **dadurch gekennzeichnet, dass** eine Abdeck-Scheibe (4) direkt oder indirekt in einer rotationsmässig fixierten Art und Weise mit der Kurbelwelle verbunden ist, und dass das wenigstens eine Fixier-Mittel (6,6',6'') in eine Aussparung in der Abdeck-Scheibe (4) eingreift, wenn der Freilauf aufgehoben ist.

7. Kurbel nach Anspruch 6, **dadurch gekennzeichnet, dass** eine Vielzahl von Fixier-Mitteln (6, 6') vorgesehen ist, welche in einer verteilten Art und Weise rund um die Peripherie der Abdeck-Scheibe (4) verteilt sind.

8. Kurbel nach einem der Ansprüche 6 und 7, **dadurch gekennzeichnet, dass** ein Dreh-Ring (5) angeordnet ist, welcher konzentrisch mit der Abdeckscheibe (4) angeordnet ist, und dass das wenigstens eine Fixier-Mittel ein Feder-Verriegelungs-Bolzen (6) ist, welcher mit der Abdeck-Scheibe (4) durch Drehen des Drehringes (5) in Eingriff gebracht werden kann.

9. Kurbel nach einem der Ansprüche 6 bis 8, **dadurch gekennzeichnet, dass** der Drehring (5) auf sich wenigstens ein Federband (8) angeordnet hat, welches das wenigstens eine Fixiermittel (6) in Eingriff mit der Abdeck-Scheibe (4) bringt, wenn der Dreh-Ring (5) gedreht wird.

10. Kurbel nach einem der Ansprüche 6 und 7, **dadurch gekennzeichnet, dass** das wenigstens eine Fixier-Mittel ein Verriegelungs-Keil (6') ist, welcher mit einem exzentrischen Bolzen (5') verbunden ist, und dass der Verriegelungs-Keil (6') in Eingriff mit der Abdeckscheibe (4) gebracht werden kann, indem der exzentrische Bolzen (5') gedreht wird.

11. Kurbel nach Anspruch 6, **dadurch gekennzeichnet, dass** das wenigstens eine Fixier-Mittel ein Verriegelungs-Stift (6''), mit einer Aussparung (61) ist, wobei der Verriegelungsstift (6'') in Eingriff mit der Abdeckscheibe (4) in einer ersten Position ist, und wobei die Aussparung (61) die Abdeckscheibe (4) in einer zweiten Position freigibt.

## Revendications

1. Manivelle comprenant un bras (3) et un élément (1, 2) à roue libre, le bras (3) de la manivelle comportant une première extrémité affectée à la fixation d'une pédale et une seconde extrémité affectée à la fixation sur un vilebrequin au moyen de l'élément (1, 2) à roue libre, une rotation du bras (3) de la manivelle, dans une première direction, transmettant un couple au vilebrequin, et ledit bras (3) de la manivelle tournant en un mode roue libre dans le cas où ledit bras (3) de la manivelle tourne dans une seconde direction opposée, **caractérisée par le fait que** ladite manivelle présente au moins un moyen (6, 6', 6") de consignation à demeure pour neutraliser le mode roue libre, permettant ainsi au couple du bras (3) de la manivelle d'être transmis au vilebrequin dans les deux directions de rotation.

2. Manivelle selon la revendication 1, **caractérisée par le fait que** le moyen (6, 6', 6") de consignation à demeure, prévu au minimum, relie rigidement le bras (3) de la manivelle et le vilebrequin de manière directe ou indirecte.

3. Manivelle selon l'une des revendications 1 et 2, **caractérisée par le fait que** le moyen (6, 6', 6") de consignation à demeure, prévu au minimum, établit une solidarisation directe ou indirecte, avec verrouillage par concordance de formes, entre le bras (3) de la manivelle et le vilebrequin.

4. Manivelle selon l'une des revendications 1 à 3, **caractérisée par le fait que** le moyen (6, 6', 6") de consignation à demeure, prévu au minimum, établit une solidarisation, avec verrouillage par concordance de formes, entre la seconde extrémité du bras (3) de la manivelle et un adaptateur (1) relié au vilebrequin avec verrouillage rotatif.

5. Manivelle selon l'une des revendications 1 à 4, **caractérisée par le fait que** l'élément (1, 2) à roue libre est une douille (2) à roue libre qui matérialise un accouplement unidirectionnel avec un adaptateur ou l'adaptateur (1) relié au vilebrequin avec verrouillage rotatif; et **par le fait que** la seconde extrémité du bras (3) de la manivelle est reliée à la douille (2) à roue libre avec verrouillage rotatif.

6. Manivelle selon l'une des revendications 1 à 5, **caractérisée par le fait qu'**une coiffe discoïdale (4) est reliée directement ou indirectement au vilebrequin, avec verrouillage rotatif; et **par le fait que** le moyen (6, 6', 6") de consignation à demeure, prévu au minimum, s'engage dans un évidement de la coiffe discoïdale (4) lors d'une neutralisation du mode roue libre.

7. Manivelle selon la revendication 6, **caractérisée par le fait qu'**il est prévu une pluralité de moyens (6, 6') de consignation à demeure qui sont agencés, avec répartition, autour de la périphérie de la coiffe discoïdale (4).

8. Manivelle selon l'une des revendications 6 et 7, **caractérisée par** la présence d'une bague rotative (5) disposée concentriquement à la coiffe discoïdale (4) ; et par le fait que le moyen de consignation à demeure, prévu au minimum, est un téton de verrouillage (6) à détente élastique pouvant être mis en prise avec la coiffe discoïdale (4) par rotation imprimée à ladite bague rotative (5).

9. Manivelle selon l'une des revendications 6 à 8, **caractérisée par le fait qu'**au moins une languette élastique (8), montée sur la bague rotative (5), instaure une venue en prise entre la coiffe discoïdale (4) et le moyen (6) de consignation à demeure, prévu au minimum, lorsque ladite bague rotative (5) est animée d'une rotation.

10. Manivelle selon l'une des revendications 6 et 7, **caractérisée par le fait que** le moyen de consignation à demeure, prévu au minimum, est un coin de verrouillage (6') relié à un tenon excentré (5'); et **par le fait que** ledit coin de verrouillage (6') peut être mis en prise avec la coiffe discoïdale (4) par rotation imprimée audit tenon excentré (5').

11. Manivelle selon la revendication 6, **caractérisée par le fait que** le moyen de consignation à demeure, prévu au minimum, est une cheville de verrouillage (6") munie d'un évidement (61), ladite cheville de verrouillage (6") étant en prise avec la coiffe discoïdale (4) dans une première position, et ledit évidement (61) libérant ladite coiffe discoïdale (4) dans une seconde position.
